# EUROPEAN PATENT SPECIFICATION

(11) **EP 2 083 495 B1**
(45) Date of publication and mention of the grant of the patent: **23.12.2015**
(21) Application number: 09151197.2
(22) Date of filing: 23.01.2009
(51) Int. Cl.: H02J 7/00

(54) **Battery pack and method of charging the same**
Batteriepack und Aufladeverfahren dafür
Ensemble de batteries et méthode pour les charger

(30) Priority: 23.01.2008 KR 20080007161
(43) Date of publication of application: 29.07.2009
(73) Proprietor: Samsung SDI Co., Ltd., Suwon-si Gyeonggi-do (KR)
(72) Inventor: Sim, Se-Sub, Gyeonggi-do (KR); Segawa, Susumu, Gyeonggi-do (KR); Yang, Jong-Woon, Gyeonggi-do (KR)
(74) Representative: Gulde & Partner

(56) References cited:
- EP-A- 1 855 368
- US-A1- 2004 113 591

## Description

### BACKGROUND OF THE INVENTION

### 1. Field of the Invention

Aspects of the present invention relate to a battery pack and a method of charging the same, and more particularly, to a battery pack in which reductions in stability and life span due to overcharge of the battery pack can be prevented, and a method of charging the same.

### 2. Description of the Related Art

Recently, compact and lightweight hand-held electrical/electronic appliances such as cellular phones, notebook computers, and camcorders have been vigorously developed and manufactured. These appliances typically employ a battery pack so that they can operate anywhere without the application of a separate power source. The battery pack generally uses a nickel-cadmium (Ni-Cd) battery, a nickel-metal hydride (Ni-MH) battery or a lithium (Li) battery, which are rechargeable secondary batteries in consideration of the economic aspect.

Since the Li secondary battery has a higher operating voltage (i.e., about three times higher), and a higher energy density per unit weight than the Ni-Cd or Ni-MH battery, the battery pack using the Li secondary battery is widely used in hand-held electrical/electronic appliances. A Li secondary battery can be classified into a Li ion battery using a liquid electrolyte and a lithium polymer battery using a polymer electrolyte according to the kind of the electrolyte, or classified into a cylindrical type, a prismatic type and a pouch type according to the shape of the battery.

When the Li secondary battery is used in the battery pack, the Li secondary battery is electrically connected to a protection circuit board to prevent overcharge of the Li secondary battery during charging/discharging, or may be formed as a bare cell type to be electrically connected to the protection circuit board.

Generally, the battery pack using the Li secondary battery may be charged using a constant current-constant voltage (CC/CV) method, which reduces a current applied to the battery pack by setting a constant voltage as a charging voltage, applying a constant current to the battery pack until a voltage of the battery pack reaches the set charging voltage, and maintaining the voltage applied to the battery pack to the charging voltage after the voltage of the battery pack reaches the set charging voltage.

In the CC/CV charging method, a section in which a constant current is applied to the battery pack is referred to as a constant current section (CC section), and a section in which a constant voltage is applied thereto is referred to as a constant voltage section (CV section). Further, when the current applied to the battery pack is reduced to C/20 in the CV section, it is determined that the battery pack is fully charged, and the charging is terminated. Here, 1C means that the battery is charged with the same current as the rating capacity of the Li secondary battery. For example, when the capacity of the Li secondary battery is 1000mAh and a current amount applied for charging is 1000mAh, it is defined as 1C charge, and when the applied current amount is 2000mAh, it is defined as 2C charge. In this example, a C/20 charge would be 50mAh.

However, the battery pack may already be fully charged before the charging current reaches C/20 in the CV section when the charging voltage applied for charging the battery pack is the maximum permissible charging voltage. Thus, when the charge completion time of the battery pack is determined by the conventional method, the battery pack may be overcharged, and thus stability and life span of the battery pack may be reduced.

### SUMMARY OF THE INVENTION

Aspects of the present invention provide a battery pack that can prevent overcharge regardless of a charging voltage applied to the battery pack by determining a charge completion time of the battery pack using an open circuit voltage (OCV) of the battery pack, and a method of charging the same.

The invention is defined by the features of the battery pack of independent claim 1. Preferred embodiments are defined in the dependent claims.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a schematic view of a battery pack according to an embodiment of the present invention;
FIG. 2 is a waveform of a charging voltage applied to the battery pack of FIG. 1; and
FIG. 3 is a flowchart illustrating a method of charging a battery pack according to another embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

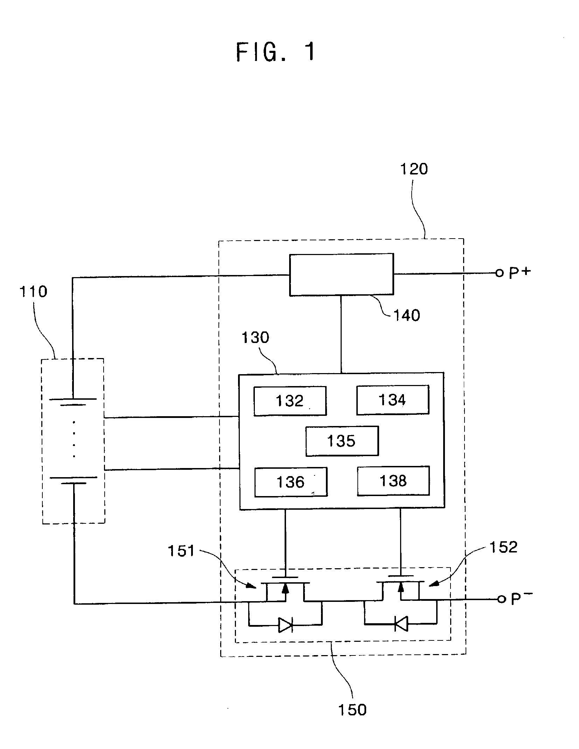

FIG. 1 is a schematic view of a battery pack according to an embodiment of the present invention. Referring to FIG. 1, the battery pack includes a battery assembly 110 including at least one bare cell or a secondary battery which is rechargeable, a battery management system 120 and external terminals P+ and P- electrically connecting the battery assembly 110 with an external power supply or load.

The battery management system 120 includes a controller 130 that controls charging/discharging of the battery assembly, and a charge/discharge controller 150 that controls an electrical connection between the battery assembly 110 and the external terminals P+ and P- in response to a signal from the controller 130.

The battery management system 120 may further include secondary protection devices 140 such as a fuse disposed on a high current path of the battery assembly 110 and blocking the electrical connection between the battery assembly 110 and the external terminals P+ and P-, a self-control protector (SCP) or a positive temperature coefficient (PTC) thermistor, in order to prevent the flow of overcurrent through the battery assembly 110 due to a malfunction of the controller 130 or the charge/discharge controller 150.

The controller 130 includes a voltage measuring part 132 that measures a charging voltage of the battery assembly 110, an open circuit voltage (OCV) measuring part 134 that measures an OCV of the battery assembly 110, a voltage comparing part 136 that compares the charging voltage and the OCV with a set voltage of the battery assembly 110, a full-charge/discharge detecting part 138 that determines whether or not the battery assembly is fully charged in response to a signal received from the voltage comparing part 136, and a protection circuit 135 that controls the charging/discharging of the battery assembly 110 according to a charged state of the battery assembly 110. The voltage comparing part 136 may include a first voltage comparing part (not separately illustrated) that compares the charging voltage of the battery assembly 110 with a first set voltage, and a second voltage comparing part (not illustrated) that compares the OCV of the battery assembly 110 with a second set voltage.

The charge/discharge controller 150 includes a charge FET device 151 and a discharge FET device 152, and controls the charging/discharging of the battery assembly 110 by driving any one of the charge and discharge FET devices 151 and 152 by the control of the protection circuit 135 and the full-charge detecting part 138.

The external terminals P+ and P- are connected parallel to the battery assembly 110, and comprise a positive electrode (P+) and a negative electrode (P-). The external terminals P+ and P- may electrically connect the electrode assembly 110 to the external power supply or load so as to charge or discharge the battery assembly 110. More specifically, when the external power supply is connected to the external terminals P+ and P-, the battery assembly 110 is charged, and when the load is connected to the external terminals P+ and P-, the battery assembly 110 is discharged.

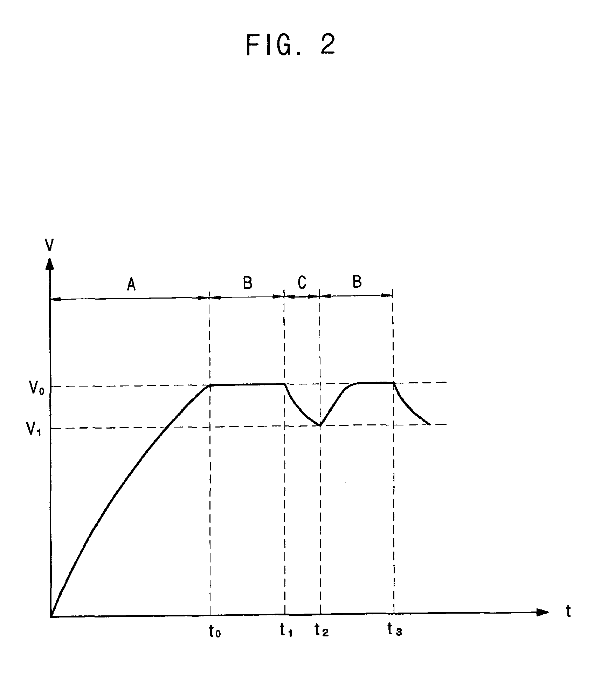

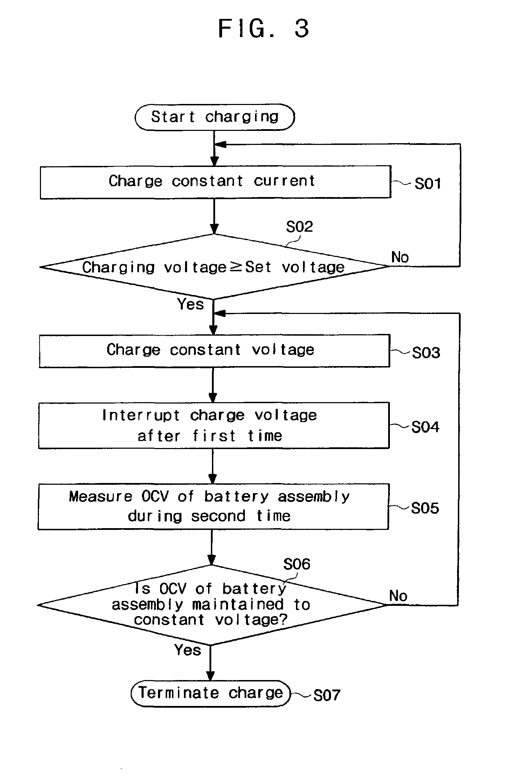

FIG. 2 is a waveform of a charging voltage applied to the battery pack of FIG. 1, and FIG. 3 is a flowchart illustrating a method of charging a battery pack according to an embodiment of the present invention. In the method of charging a battery pack, when an external power supply is connected to external terminals P+ and P-, and the battery pack starts to charge, the method resembles a conventional constant current-constant voltage (CC/CV) method in that the battery pack gradually increases a charging voltage applied to the battery assembly 110 to flow a constant current into the battery assembly 110, in a constant current section (indicated by reference character "A" in FIG. 2), in which the charging voltage applied to the battery assembly 110 reaches a first set voltage V0, (S01). Here, the first set voltage V0 may be a charging voltage such as may be used in a constant voltage section in the conventional CC/CV method.

Subsequently, when the voltage applied to the battery assembly 110 is equal to or higher than the first set voltage V0 (S02), the charging voltage applied to the battery assembly 110 is maintained at a voltage corresponding to the first set voltage V0 (S03) for a first set time period (t1-t0), as in the constant voltage section of the CC/CV method. The constant voltage section is indicated by reference character "B" in FIG. 2.

After the constant voltage section B, the charging voltage applied to the battery assembly 110 is interrupted (S04).

As a non-limiting example, a first set time period, that is, the time period (t1-t0) of the constant voltage section B, may be 1 to 2 minutes. When the time period of the constant voltage section B is too long, the same problems that occur in the conventional charging method may occur. That is, there may be overcharging of the battery assembly 110. On the other hand, when the time period of the constant voltage section B is too short, the overall time taken to charge the battery pack increases. Alternatively, the charging voltage applied to the battery assembly 110 may be interrupted right after the charging voltage applied to the battery assembly 110 reaches the first set voltage V0 without maintaining the voltage at V0 for the first set time period.

Then, during a second set time period, which is a charge stop section indicated by reference character "C" in FIG. 2 and in which the charging voltage is interrupted, the open circuit voltage (OCV) of the battery assembly 110 is measured (S05). Alternatively, the OCV of the battery assembly 110 may be measured after expiration of the second set time period, that is, the time period (t2-t1) of the charge stop section C.

The second set time period (t2-t1) of the charge stop section C may be shorter than the first set time period (t1-t0) of the constant voltage section B. When the time period of the charge stop section C is too long, the voltage of the battery assembly 110 may significantly decrease, and when the time period of the charge stop section C is too short, the OCV of the battery assembly 110 may not be stably measured. As a non-limiting example, the second set time period may be 5 to 10 seconds.

Then, whether the OCV of the battery assembly 110 is equal to or higher than a second set voltage is determined (S06). If the OCV is equal to or higher than the second set voltage, the charging of the battery assembly 110 is completed (S07). If the OCV of the battery assembly 110 is determined to be less than the second set voltage, a voltage corresponding to the first set voltage V0 is once again applied to the battery assembly 110 to charge the battery assembly 110 with a constant voltage for the first set time period (returning to S03). Here, since the first set voltage V0 is applied as the charging voltage to charge the battery assembly 110, even after the voltage of the battery assembly 110 decreases to a lower level V1 during to the charge stop section C, the charging voltage of the battery assembly 110 never exceeds the first set voltage V0.

Accordingly, as long as the voltage assembly 110 is determined to have an OCV less than the second set voltage during or at the end of the second set time period, the charging of the battery assembly 110 in the constant voltage section B with the voltage corresponding to the first set voltage V0, the interrupting of the charging in the charge stop section C, the measuring of the OCV and the comparing of the OCV of the battery assembly 110 with the second set voltage are repeatedly performed.

Consequently, the battery pack according to the embodiment of the present invention determines the charge stop time by interrupting charging after a first set time period of charging at a constant voltage, measuring an OCV of the battery pack during or after a second set time period after the charging is interrupted and comparing the OCV with a first set voltage, so as to prevent overcharge of the battery pack even when the maximum permissible charging voltage is applied for charging the battery pack and thus to prevent decreases in stability and life span of the battery pack.

## Claims

1. A battery pack comprising:
a secondary battery (110) ; and
a battery management system (120) connected to the secondary battery (110),
wherein the battery management system (120) includes:
a voltage measuring part (132) adapted to measure the charging voltage of the secondary battery (110);
an open circuit voltage OCV measuring part (134) adapted to measure the open circuit voltage of the secondary battery after an interruption of the charging of the secondary battery (110);
a voltage comparing part (136) adapted to compare the measured charging voltage and the measured OCV of the secondary battery with the first set voltage;
a full-charge detecting part (138) adapted to determine whether or not the secondary battery (110) is fully charged in response to a signal from the voltage comparing part (136);
a protection circuit (135) adapted to control the charging of the secondary (110) battery depending on a charged state of the secondary battery (110); and
a charge/discharge controller (150) electrically connected between the secondary battery (110) and an external terminal (P+, P-) to control an electrical connection between the secondary battery (110) and the external terminal (P+, P-) in response to signals from the full-charge detecting part (138) and the protection circuit (135).

2. The battery pack according to claim 1, wherein the voltage comparing part (136) includes a first voltage comparing part adapted to compare the charging voltage of the secondary battery (110) with the first set voltage, and a second voltage comparing part adapted to compare the open circuit voltage of the secondary battery (110) with the second set voltage.

3. The battery pack according to one of the claims 1 or 2, wherein the charge/discharge controller (150) includes a charge FET device (151) and a discharge FET device (152).

## Patentansprüche

1. Batteriepack, umfassend:
eine Sekundärbatterie (110) und
ein mit der Sekundärbatterie (110) verbundenes Batteriemanagementsystem (120),
wobei das Batteriemanagementsystem (120) Folgendes beinhaltet:
ein Spannungsmessteil (132), das angepasst ist, die Ladespannung der Sekundärbatterie (110) zu messen;
ein Leerlaufspannungsmessteil (134), das angepasst ist, die Leerlaufspannung der Sekundärbatterie nach einer Unterbrechung des Ladens der Sekundärbatterie (110) zu messen;
ein Spannungsvergleichsteil (136), das angepasst ist, die gemessene Ladespannung und die gemessene Leerlaufspannung der Sekundärbatterie mit der ersten eingestellten Spannung zu vergleichen;
ein Vollladungserkennungsteil (138), das angepasst ist, in Reaktion auf ein Signal vom Spannungsvergleichsteil (136) festzustellen, ob die Sekundärbatterie (110) vollständig geladen ist oder nicht;
eine Schutzschaltung (135), die angepasst ist, das Laden der Sekundärbatterie (110) in Abhängigkeit von einem Ladezustand der Sekundärbatterie (110) zu steuern; und
eine Lade-/Entladesteuerung (150), die zwischen die Sekundärbatterie (110) und einen externen Anschluss (P+, P-) geschaltet ist, um in Reaktion auf Signale vom Vollladungserkennungsteil (138) und von der Schutzschaltung (135) eine elektrische Verbindung zwischen der Sekundärbatterie (110) und dem externen Anschluss (P+, P-) zu steuern.

2. Batteriepack nach Anspruch 1, wobei das Spannungsvergleichsteil (136) ein erstes Spannungsvergleichsteil, das angepasst ist, die Ladespannung der Sekundärbatterie (110) mit der ersten eingestellten Spannung zu vergleichen, und ein zweites Spannungsvergleichsteil, das angepasst ist, die Leerlaufspannung der Sekundärbatterie (110) mit der zweiten eingestellten Spannung zu vergleichen, beinhaltet.

3. Batteriepack nach einem der Ansprüche 1 oder 2, wobei die Lade-/Entladesteuerung (150) eine Lade-Feldeffekttransistorvorrichtung (151) und eine Entlade-Feldeffekttransistorvorrichtung (152) beinhaltet.

## Revendications

1. Un bloc-batteries comprenant :
une batterie secondaire (110) : et
un système de gestion de batterie (120) connecté à la batterie secondaire (110), le système de gestion de batterie (120) comprenant : un élément de mesure de la tension (132) adapté pour mesurer la tension de chargement de la batterie secondaire (110) ;
un élément de mesure de la tension en circuit ouvert OCV (134) adapté pour mesurer la tension en circuit ouvert de la batterie secondaire après une interruption de chargement de la batterie secondaire (110) ;
un élément de comparaison de la tension (136) adapté pour comparer la tension de chargement mesurée et l'OCV mesurée de la batterie secondaire avec la première tension définie ;
un élément de détection de charge complète (138) adapté pour déterminer si la batterie secondaire (110) est complètement chargée ou non, en réponse à un signal de l'élément de comparaison de la tension (136) ;
un circuit de protection (135) adapté pour contrôler le chargement de la batterie secondaire (110) en fonction d'un état chargé de la batterie secondaire (110) ; et un contrôle de charge/décharge (150) connecté électriquement entre la batterie secondaire (110) et un terminal externe (P+, P-) pour contrôler une connexion électrique entre la batterie secondaire (110) et le terminal externe (P+, P-), en réponse à des signaux de l'élément de détection de charge complète (138) et du circuit de protection (135).

2. Le bloc-batteries selon la revendication 1, l'élément de comparaison de tension (136) comprenant un premier élément de comparaison de tension adapté pour comparer la tension de chargement de la batterie secondaire (110) avec la première tension définie, et un deuxième élément de comparaison de tension adapté pour comparer la tension en circuit ouvert de la batterie secondaire (110) avec la deuxième tension définie.

3. Le bloc-batteries selon l'une des revendications 1 ou 2, le contrôleur de charge/décharge (150) comprenant un dispositif FET de charge (151) et un dispositif FET de décharge (152).
